# EUROPEAN PATENT APPLICATION

(11) **EP 1 763 985 A1**
(43) Date of publication of application: **21.03.2007**
(21) Application number: 06119644.0
(22) Date of filing: 28.08.2006
(51) Int. Cl.: A01C 15/02, G01F 11/18

(54) **Portable dispenser for particulate material**

(30) Priority: 14.09.2005 IT PD20050066 U
(71) Applicant: Simeoni, Pericle, 33077 Sacile PN (IT)
(72) Inventor: Simeoni, Pericle, 33077 Sacile PN (IT)
(74) Representative: Modiano, Micaela Nadia

(57) **Abstract**

A portable dispenser for particulate material, which comprises a dispensing hose (11), available to the grip of a user, in which the particulate material flows by gravity. The dispensing hose (11) has, at one end, an outlet (12) which is closed by a flow control device (13), which is functionally connected to an actuation control (14) available to a hand of the user. The flow control device (13) comprises a dosage compartment (21), which is associated with means (22) for translational motion from a position for loading particulate material to a position for discharging the material. The dosage compartment (21) is provided with a first opening (28), which is connected to the dispensing hose (11) when it is in the loading position, and a second opening (30), which is directly connected to the outside when it is in the discharge position. The means (22) for translational motion are connected functionally to the actuation control (14). The flow control device (13) further comprises means (32) for adjusting the containment capacity of the dosage compartment (21).

## Description

The present invention relates to a portable dispenser for particulate material, useful particularly but not exclusively for dispensing fertilizer or similar products.

Currently, fertilizer is distributed in the culture tanks of plant nurseries generally by using a portable dispenser constituted by a dispensing hose which is held in one hand by the user and inside which the fertilizer flows by gravity.

This dispensing hose is connected, at one end, to a collection tank, which is typically carried on the back or on one shoulder by the user; a dispensing outlet is provided at the opposite end.

Flow control means are associated with said dispensing hose, are controlled by a user and allow the controlled release of the fertilizer.

The background art as regards dispensing hoses makes a distinction among the various known models depending on the type of said flow control means used: said means can be constituted, for example, by a valve arranged at the end of the dispensing hose that is associated with the collection tank or by a rocker body which is pivoted to the end of the hose and obstructs its distribution opening and moves when it is placed in contact with the ground, thus making the fertilizer flow out.

These known obstruction means, however, have drawbacks which limit their functional effectiveness.

In particular, these drawbacks affect the efficiency and ease of the dispensing of the fertilizer and the convenience of use of the dispenser.

One solution provided by the same inventor as the present invention is disclosed in Italian Patent Application No. PD2004A000195.

In this patent application, the portable dispenser for particulate material comprises a dispensing hose, available for the grip of a user, in which the particulate material flows by gravity.

The dispensing hose has, at one end, a dispensing outlet which is associated with flow control means.

Said flow control means comprise an actuation control, which is available to the same hand that supports the dispensing hose and is connected kinematically to a flow control device, such as a flow control body for closing the dispensing outlet.

The actuation control is constituted by a first-class lever, which is pivoted with respect to the dispensing hose and is available to the same hand of the user that supports the dispensing hose, while the flow control body is pivoted centrally with respect to the dispensing hose and comprises, at one end, a closure flap which rests against the edge of the dispensing outlet and, at the opposite end, an actuation portion which is connected mechanically to the centrally-pivoted control lever.

This solution has allowed to dispense easily the particulate material without tiring the user excessively and to also allow precise dosage to operators who have dispensing experience and a careful hand.

However, although the above described dispenser has been received well commercially, it is not exempt from improvements.

The search for nonspecialized low-cost labor has in fact led plant nursery managers to use as operators and dispensers workers who lack dosage experience and do not have a sensitivity suitable to keep the dosage flap of the described dispensers adequately open, with the result of less than optimum dosage.

The aim of the present invention is to provide a portable dispenser for particulate material that allows to dose adequately the particulate material without tiring the operator.

Within this aim, an object of the present invention is to provide a portable dispenser for particulate material that allows controlled dosage of the material to be dispensed.

Another object of the present invention is to provide a portable dispenser for particulate material that allows to dose the material without requiring particular sensitivity.

Another object of the present invention is to provide a portable dispenser for particulate material that is easy to handle.

This aim and these and other objects, which will become better apparent hereinafter, are achieved by a portable dispenser for particulate material, which comprises a dispensing hose, available to the grip of a user, in which the particulate material flows by gravity, said dispensing hose having, at one end, an outlet which is closed by a flow control device, which is functionally connected to an actuation control available to a hand of the user, characterized in that said flow control device comprises a dosage compartment, which is associated with means for translational motion from a position for loading particulate material to a position for discharging said material, said dosage compartment being provided with a first opening, which is connected to said dispensing hose when it is in said loading position, and a second opening, which is functionally connected to the outside when it is in said discharge position, said means for translational motion being connected functionally to said actuation control, said flow control device further comprising means for adjusting the containment capacity of said dosage compartment.

Further characteristics and advantages of the invention will become better apparent from the following detailed description of a preferred but not exclusive embodiment thereof, illustrated by way of non-limiting example in the accompanying drawings, wherein:
Figure 1 is a perspective view of a dispenser according to the invention;
Figure 2 is a perspective view of a portable dispenser according to the invention, applied to a tank of fertilizing material worn by a user;
Figure 3 is a sectional side view of the detail related to the flow control device of the dispenser of Figure 1 while it is in the flow control step;

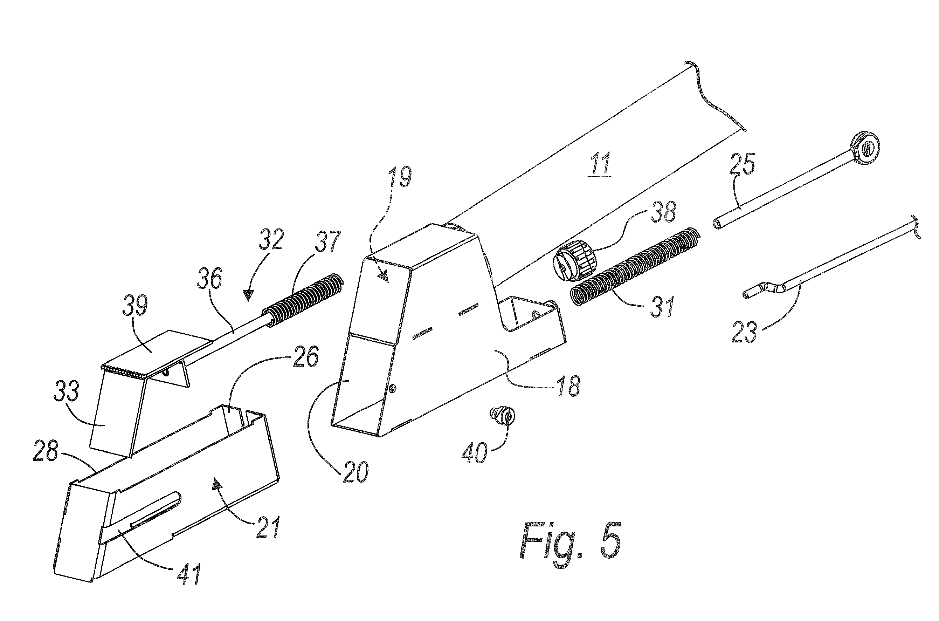

Figure 4 is a sectional side view of the detail related to the flow control device of Figure 3 while it is in the opening step for distributing the material;
Figure 5 is an exploded perspective view of the detail related to the flow control device.

It should be noted that everything that is found to be already known during the patenting process is understood not to be claimed and to be the subject of a disclaimer.

With reference to the figures, a portable dispenser for particulate material according to the invention is generally designated by the reference numeral 10.

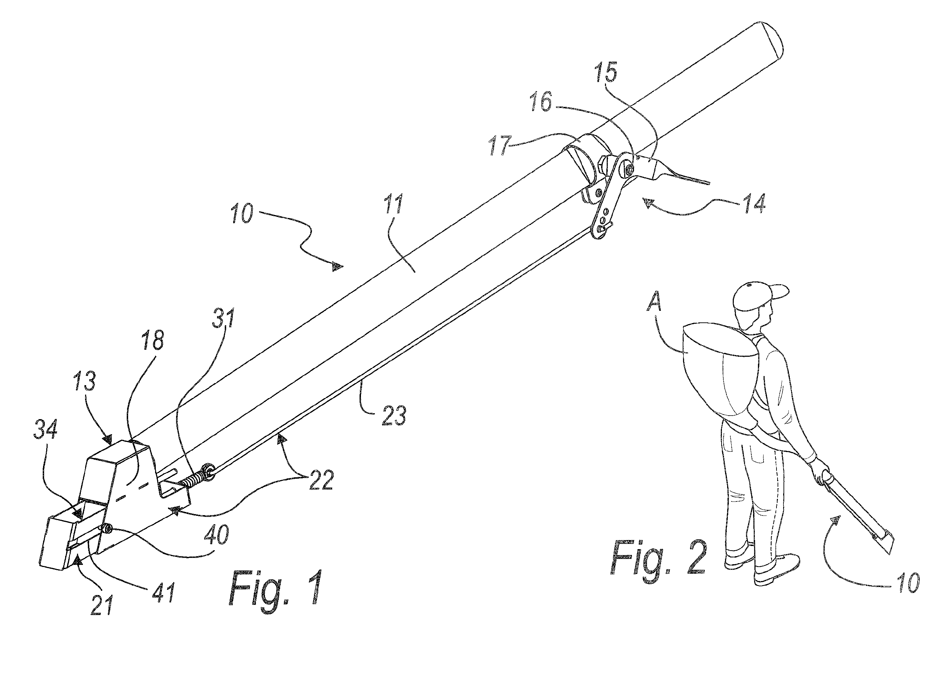

The portable dispenser 10 is constituted substantially by a dispensing hose 11, which is connected at one end to a tank of the particulate material to be dispensed, designated by the reference letter A in Figure 2.

The dispensing hose 11 is available for the grip of a user.

In the dispensing hose 11, the particulate material flows by gravity from the top downward to one end of the dispensing hose 11; in said end there is an outlet 12, which is closed by a flow control device 13, described hereinafter, which is functionally connected to an actuation control 14, which is available to one hand of the user.

The actuation control 14 is constituted by a first-class lever 15, which is pivoted to the dispensing hose 11; in particular, the first-class lever 15 is constituted substantially by an L-shaped lamina and is pivoted, by means of a first pivot 16, to a mounting collar 17, which is locked on the dispensing hose 11.

One end of the first-class lever 15 is available to the user, while the opposite end is connected to the flow control device 13.

The flow control device 13 comprises a box-like frame 18, which is fitted at the end of the dispensing hose 11 and forms a first chamber 19, which is connected directly to the outlet 12, and a second chamber 20, which lies below the first chamber 19 and inside which a dosage compartment 21 is arranged.

The dosage compartment 21 is associated with translational motion means 22, which in this embodiment are constituted by the walls of the second chamber 20, which act as a guide, and by a rigid transmission 23, which is articulated, at a first end, to an end of the first-class lever 15 and, at its second end, to the head 24 of a pin 25 which is fixed to the back wall 26 of the dosage compartment 21.

The means 22 for translational motion are adapted to move the dosage compartment 21 from a position for loading the particulate material by gravity to a position for discharging said particulate material, again by gravity, into the outside environment.

In particular, the dosage compartment 21 has a first opening 28, which is connected to the first chamber 19 (and therefore in practice is connected to the inside of the dispensing hose, since the outlet 12 is open onto the first chamber 19) when the dosage compartment 21 is in the loading position; in this embodiment, the dosage compartment 21 is in the loading position when it is retracted into the second chamber 20 and corresponds to an inactive position of the dispenser 10 (flow blocking step of the flow control device 13).

The dosage compartment 21 also has a second opening 30, which is functionally connected to the outside when it is in the discharge position; in particular, the second opening 30 is formed on the bottom of the dosage compartment, while the first opening 28 is arranged opposite to it and is formed on the top face of the dosage compartment.

The discharge position corresponds to the translational motion of the dosage compartment 21 outside the second chamber 20.

Means 31 for returning the dosage compartment 21 from the discharge position to the loading position are associated with the translational motion means 22 and are constituted by an elastic element which is interposed between the head 24 of the pin 25 and an outside wall of the second chamber 20.

Advantageously, the flow control device 13 further comprises means 32 for adjusting the containment capacity of the dosage compartment 21.

The adjustment means 32 comprise for example a flap 33, which divides the internal space of the dosage compartment 21 into a front dosage part 34, in which the first opening 28 and the second opening 30 are formed, and a rear part 35, which cannot be occupied by the particulate material.

A threaded pin 36 is fixed to the flap 33 and is substantially oriented in the direction of translational motion of the dosage compartment 21, and passes through a hole formed in the back wall 26 of the dosage compartment 21.

An elastic element 37 is provided between the flap 33 and the back wall 26 and is constituted for example by a helical spring which wraps around the pin 36.

An adjustment nut 38 is screwed onto the threaded part of the pin 36 which lies outside the rear part 35 of the dosage compartment 21 and keeps the elastic element 37 compressed.

By turning the adjustment nut 38, the flap 33 is moved with respect to the walls of the dosage compartment 21, consequently varying its capacity.

Advantageously, the flap 33 has, at an end edge, a top portion 39 which protrudes toward the rear part 35 of the dosage compartment 21, so that when the flap 33 is adjusted into a position of minimum capacity of the dosage compartment, material does not fall from the first chamber 19 into the rear part 35.

On the side of the box-like frame 18 there is an element for stopping the outward translational stroke, in the unloading position, of the dosage compartment 21; such element is constituted by an additional pin 40, which is inserted in a slot 41 which is parallel to the direction of translational motion and is formed in the side wall 42 of the dosage compartment 21 at the front dosage part 34.

The operation of the invention is as follows.

The user does not press the available end of the first-class lever 15; in this case, the dosage compartment 21 is completely inside the second chamber 20 and the particulate material falls by gravity from the first chamber 19 (which is monolithic with the inside of the dispensing hose 11) into the front dosage part 34 of the dosage compartment 21 through the first opening 21.

By pressing the end of the first-class lever 15 that is available to the user, the transmission 23 pushes the pin 25, which is fixed to the dosage compartment 21, and accordingly the dosage compartment performs a translational movement, moving toward the outside of the second chamber 20.

In this manner, the second opening 30 of the dosage compartment 21 is no longer obstructed by the bottom wall of the second chamber 20 and is thus connected to the outside environment, where it allows, by gravity, the outflow of all the particulate material contained in the dosage compartment, which corresponds to the intended dose.

By releasing the first-class lever 15, by virtue of the return means 31, the dosage compartment returns within the second chamber 20, where by gravity it fills again with a new dose of material.

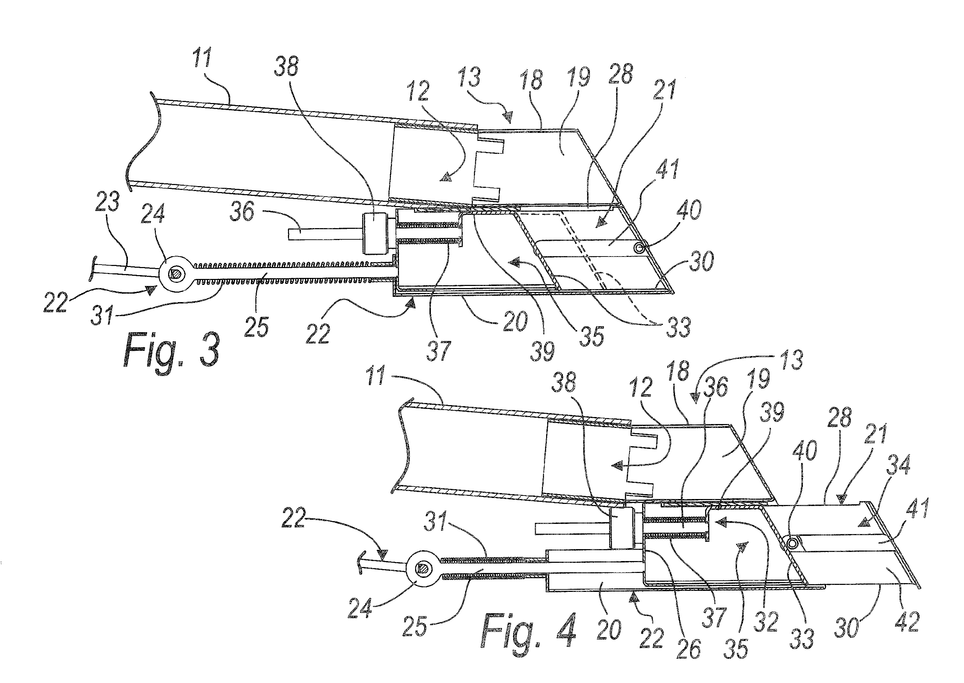

If one wishes to vary the capacity of the dosage compartment in order to increase or decrease the dose of material to be dispensed, it is sufficient to act on the adjustment nut 38 that moves the flap 33, varying the volume of the dosage compartment that can be occupied by the particulate material (as clearly shown by the disk shown in broken lines in Figure 3).

In practice it has been found that the invention thus described solves the problems noted in known types of portable dispenser for particulate material; in particular, the present invention provides a portable dispenser for particulate material which allows to dose the particulate material adequately without tiring the operator.

This has been achieved by providing a dosage compartment with adjustable capacity, which allows to dispense discrete quantities of material.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Utility Model Application No. PD2005U000066 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A portable dispenser for particulate material, comprising a dispensing hose (11), available to the grip of a user, in which the particulate material flows by gravity, said dispensing hose (11) having, at one end, an outlet (12) which is closed by a flow control device (13), which is functionally connected to an actuation control (14) available to a hand of the user, **characterized in that** said flow control device (13) comprises a dosage compartment (21), which is associated with means (22) for translational motion from a position for loading particulate material to a position for discharging said material, said dosage compartment (21) being provided with a first opening (28), which is connected to said dispensing hose (11) when it is in said loading position, and a second opening (30), which is directly connected to the outside when it is in said discharge position, said means (22) for translational motion being connected functionally to said actuation control (14), said flow control device (13) further comprising means (32) for adjusting the containment capacity of said dosage compartment (21).

2. The portable dispenser according to claim 1, **characterized in that** said flow control device (13) comprises a box-like frame (18), which is mounted at the end of said dispensing hose (11) and forms a first chamber (19), which is connected directly to said outlet (12), and a second chamber (20), which lies below said first chamber (19) and inside which said dosage compartment (21) is arranged.

3. The portable dispenser according to claim 2, **characterized in that** said actuation control (14) is constituted by a first-class lever (15), which is pivoted to said dispensing hose (11), said means (22) for translational motion being constituted by the walls of said second chamber (20), which act as a guide, and by a rigid transmission (23), which is articulated, at a first end, to an end of said first-class lever (15) and, at its second end, to the back wall (26) of said dosage compartment (21), means (31) for returning said dosage compartment (21) from the discharge position to the loading position being associated with said translational motion means (22).

4. The portable dispenser according to claim 3, **characterized in that** said means (31) for the return of said dosage compartment (21) from the unloading position to the loading position comprise an elastic element which is interposed between the head (24) of a pin (25) which is fixed to the back wall (26) of said dosage compartment (21) and an outside wall of said second chamber (20).

5. The portable dispenser according to one or more of the preceding claims, **characterized in that** said means (32) for adjusting the containment capacity of said dosage compartment (21) comprise a flap (33), which divides the internal space of said dosage compartment (21) into a front dosage part (34), in which the first opening (28) and the second opening (30) are formed, and a rear part (35), which cannot be occupied by the particulate material, a threaded pin (36) being fixed to said flap (33) and being substantially oriented in the direction of translational motion of said dosage compartment (21) and passing through a hole formed in the back wall (26) of said dosage compartment (21), an elastic element (37) being provided between said plate (33) and said back wall (26), an adjustment nut (38) being screwed onto the threaded part of said pin (36) which lies outside said rear part (35) of said dosage compartment (21).

6. The portable dispenser according to claim 5, **characterized in that** said flap (33) has, at an end edge, a top face portion (39) which protrudes toward said rear part (35) of said dosage compartment (21), so that when said flap (33) is adjusted into a position of minimum capacity of the dosage compartment, material does not fall from said first chamber (19) into said rear part (35).

7. The portable dispenser according to one or more of the preceding claims, **characterized in that** on the side wall of said box-like frame (18) there is an element for stopping the outward translational motion into the discharge position of said dosage compartment (21), said element being constituted by an additional pin (40) inserted in a slot (41), which is parallel to the direction of translational motion and is formed in the side wall (42) of said dosage compartment (21) at said front dosage part (34).
